# EUROPÄISCHE PATENTSCHRIFT

(11) **EP 2 034 593 B1**
(45) Veröffentlichungstag und Bekanntmachung des Hinweises auf die Patenterteilung: **13.07.2016**
(21) Anmeldenummer: 08009593.8
(22) Anmeldetag: 27.05.2008
(51) Int. Cl.: H02K 33/12, H02K 33/16, H02K 7/106

(54) **Senkrechter Stellantrieb mit Mitteln für die Kompensation der Schwerkraft**
Vertical actuator with gravity compensation means
Actionneur vertical avec moyens de compensation de la force de gravité

(30) Priorität: 10.09.2007 CH 14192007
(43) Veröffentlichungstag der Anmeldung: 11.03.2009
(73) Patentinhaber: ETEL S.A., 2112 Môtiers (CH)
(72) Erfinder: Cardon, Vincent, 21700 Arcenant (FR)
(74) Vertreter: Pleyer, Hans Anno

(56) Entgegenhaltungen:
- EP-A2- 1 160 628
- US-A1- 2002 021 425
- US-A1- 2006 061 219

## Beschreibung

Die vorliegende Erfindung betrifft einen senkrechten Stellantrieb, der mit Mitteln für die Kompensation der Schwerkraft oder Erdanziehungskraft ausgerüstet ist. Im Fall der vorliegenden Erfindung ist der senkrechte Stellantrieb von einem Linearmotor gebildet, dessen beweglicher Teil sich senkrecht verlagert. Dieser bewegliche Teil umfasst wenigstens einen Permanentmagneten und der ortsfeste Teil des Stellantriebs umfasst ein Magnetjoch, das wenigstens eine Spule trägt. Unter Spule versteht man einen Wickel oder irgendeine Wicklung, die derart angeordnet ist, dass sie ein Magnetfeld erzeugt, wenn sie mit elektrischem Strom gespeist wird. Der Stellantrieb kann einphasig oder mehrphasig sein.

Ein dem Fachmann bekanntes Problem für die senkrechten Stellantriebe liegt in der Tatsache, dass der bewegliche Teil, der die Last, die dem Stellantrieb zugeordnet ist, umfasst, eine gewisse Masse hat und somit der Schwerkraft unterworfen ist. Bei Fehlen von Mitteln für die Kompensation dieser Schwerkraft senkt der bewegliche Teil sich im Allgemeinen, wenn der Stellantrieb nicht mehr gespeist wird. Dieser bewegliche Teil kann sich entweder gegen einen unteren Anschlag abstützen oder er kann durch das magnetische Anziehungsvermögen des Jochs in einer niedrigen Position gehalten werden. Man nennt dieses magnetische Anziehungsvermögen der Elemente aus magnetischen Werkstoffen des festen Teils für den mit einem Permanentmagneten ausgerüsteten beweglichen Teil Reluktanzkraft.

In den meisten Anwendungen ist eine niedrige Position des beweglichen Teils, der beispielsweise an seinem unteren Ende ein Werkzeug aufweist, bei Stillstehen des Stellantiebs, d.h. wenn er nicht mehr mit elektrischem Strom gespeist wird, sehr ungünstig. Somit bevorzugt man im Allgemeinen, den beweglichen Teil in einer hohen Position zu halten, wenn der senkrechte Stellantrieb stillsteht. Verschiedene Systeme für die Kompensation der Schwerkraft sind bereits in Betracht gezogen worden. Beispielsweise ist der senkrechte Stellantrieb, der durch das Dokument US 2006/0061219 verbreitet worden ist, mit Mitteln für eine pneumatische Kompensation ausgerüstet. Der bewegliche Teil weist eine zentrale Achse auf, die einen Kolben bildet, der sich in einem ortsfesten Zylinder verschiebt, in dem untenan Druckluft vorgesehen ist. Diese Druckluft übt eine nach oben gerichtete Schubkraft auf die untere Oberfläche dieser zentralen Achse aus, was ermöglicht, die Schwerkraft zu kompensieren und eine vordefinierte stabile Position zu haben, wenn der Stellantrieb nicht gespeist wird. Ein solches System weist verschiedene Nachteile auf. Erstens sind relativ sperrige zusätzliche Mittel für die Schwerekompensationsfunktion nötig. Ausserdem ist es auch nötig, Mittel vorzusehen, um ein korrektes Verschieben der zentralen Achse im Zylinder sicherzustellen. Ferner benötigt die Zufuhr von Druckluft und deren Kontrolle eine zusätzliche Vorrichtung und die Beherrschung einer zusätzlichen Technologie. Ein solches System ist also relativ komplex und kostspielig. Schliesslich bemerkt man, dass der auf die zentrale Achse wirkende Pressdruck von unterhalb dieser Achse aus ausgeübt werden muss. Somit ist der unterhalb der Achse liegende Bereich durch die Druckluftvorrichtung versperrt, die am unteren Ende des Zylinders, in dem die zentrale Achse des beweglichen Teils sich verschiebt, angeordnet ist. Unten an der zentralen Achse kann der bewegliche Teil folglich keine Last tragen. Dieser Stellantrieb ist übrigens vorgesehen, um eine Last oberhalb seines beweglichen Teils zu tragen. Dies begrenzt ernstlich die in Betracht zu ziehenden Anwendungen.

Auf Figur 1 ist ein Stellantrieb des Standes der Technik von einem Typ, der im Rahmen der vorliegenden Erfindung insbesondere in Betracht gezogen wird, schematisch im senkrechten Schnitt dargestellt. Die Beschreibung dieses senkrechten Stellantriebs 2 und seines magnetischen Verhaltens gemäss Figur 2 ermöglicht, anhand von diesem präzisen Fall das Problem des Standes der Technik aufzuzeigen, für das die vorliegende Erfindung eine wirksame Lösung vorschlägt, wie dies in der Folge unter Bezugnahme auf Figur 3 und auf die folgenden dargelegt wird.

Der Stellantrieb 2 umfasst einen ortsfesten Teil 4, der von einem zylindrischen Joch 8 aus magnetischen Werkstoffen und von einer Spule 10 gebildet ist. Diese Spule 10 umfasst einen unteren Teil mit einer in einer ersten Richtung ausgeführten Wicklung und einen oberen Teil mit einer Wicklung, die in einer zweiten Richtung, die der ersten Richtung entgegengesetzt ist, ausgeführt ist. Diese Spule 10 definiert somit einen einphasigen Stellantrieb, der jedoch derart angeordnet ist, dass das durch den unteren Teil erzeugte Magnetfeld eine Richtung aufweist, die derjenigen des durch den oberen Teil dieser Spule erzeugten Magnetfeldes entgegengesetzt ist. Diese Art und Weise, die Wicklung der Spule 10 auszuführen, ist dem Fachmann bekannt. Der bewegliche Teil 6 des Stellantriebs 2 umfasst einen Permanentmagneten 14 mit axialer Magnetisierung, der auf einer zentralen Achse oder Welle 16 montiert ist, die eine zentrale geometrische Achse 18 definiert. An den beiden Enden des Magneten sind zwei magnetische Scheiben 20 bzw. 21 angeordnet. Diese Scheiben ermöglichen, den Magnetfluss in Richtung Spule 10 zu kanalisieren. Sie bilden mit dem Magnetjoch 8 einen Magnetkreis für den Magnetfluss, der somit mit der Spule 10 gekoppelt ist, wenn diese letztere mit elektrischem Strom gespeist wird.

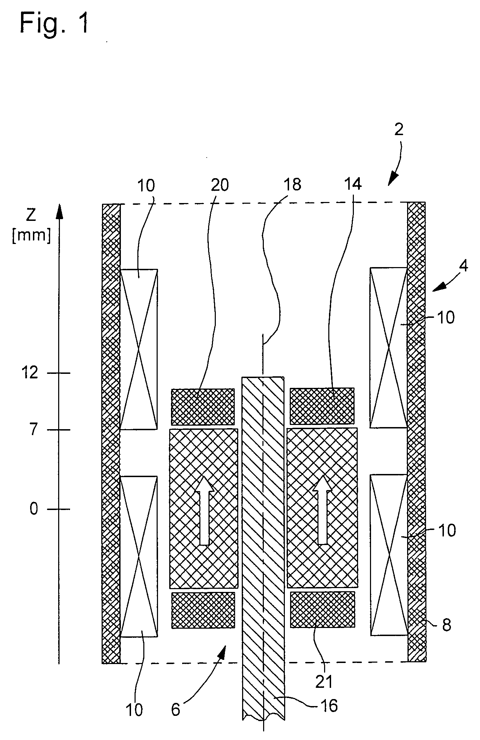

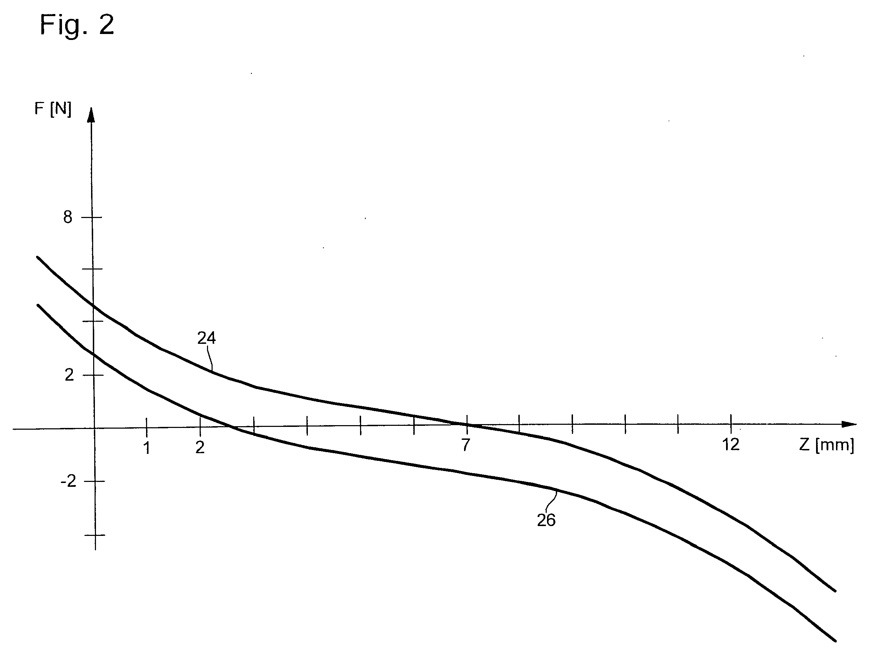

Mit der Anordnung der Spule 10, wie dargestellt, liegt der für diesen Stellantrieb vorgesehene Funktionsbereich zwischen 0 und 12 mm, wie auf der Achse Z dargestellt. Auf Figur 2 hat man zwei Kurven dargestellt. Die erste obere Kurve 24 stellt die Reluktanzkraft in Abhängigkeit von der Position des beweglichen Teils 6 längs der senkrechten Achse Z dar. Die Position des beweglichen Teils ist durch die Position der Mittelebene des Magneten 14 definiert. Auf Figur 1 ist der bewegliche Teil 6 also merklich in der 0-Position auf der Achse Z, d.h. in der unteren Position des vorgesehenen Funktionsbereichs. Man beobachtet, dass die Spule 10 in Bezug auf die Mittelebene des Magnetjochs 8 leicht nach unten verschoben ist. Diese Mittelebene entspricht der 7 mm-Position. Wenn der bewegliche Teil 6 sich in der 7 mm-Position befindet, fällt somit die Mittelebene des Permanentmagneten 14 mit der Mittelebene des Jochs 8 zusammen. Wegen der Symmetrie der resultierenden Konfiguration der magnetischen Elemente des Stellantriebs 2 ist die Reluktanzkraft, die durch den ortsfesten Teil auf den beweglichen Teil ausgeübt wird, in dieser Position gleich Null, wie dies auf Figur 2 erkennbar ist. Wenn der bewegliche Teil 6 sich senkt, ist die auf diesen letzteren ausgeübte Reluktanzkraft positiv und nimmt mit der Entfernung im Vergleich zu der Mittelposition des Jochs zu. Wenn der bewegliche Teil über diese Mittelposition hinaus verlagert wird, wird die Reluktanzkraft negativ. Die Kurve 24 stellt also eine Asymmetrie im Verhältnis zu der Mittelebene des Jochs 8 dar, das auf einer Höhe liegt, die der 7mm-Position auf der senkrechten Achse Z entspricht.

Die Kurve 26 stellt die Resultierende dar, die bei Fehlen einer elektrischen Versorgung der Spule 10 auf den beweglichen Teil 6 ausgeübt wird. Im Fall des Stellantriebs 2 ist eine Schwerkraft von 2 Newton vorgesehen. Die Kurve 26 ist also ähnlich wie die Kurve 24, jedoch um einen Wert von 2 Newton nach unten verschoben. Man beobachtet somit, dass der bewegliche Teil 6 ungefähr in der 2,5 mm-Position auf der Achse Z eine Position des stabilen Gleichgewichts hat. Das Profil der resultierenden Kurve 26 weist verschiedene Nachteile auf, die bereits zuvor wenigstens teilweise beschrieben worden sind. Die Position des stabilen Gleichgewichts des beweglichen Teils bei Fehlen einer Stromversorgung entspricht einer niedrigen Position im Funktionsbereich des Stellantriebs 2. Falls die bewegliche Masse an ihrem unteren Ende ein Werkzeug umfasst, bleibt dieses Werkzeug in einer niedrigen Position oder es senkt sich in eine solche niedrige Position, wenn die Stromversorgung unterbrochen wird. In gewissen Fällen kann dies eine Beschädigung des Werkzeugs oder des unter diesem Werkzeug angeordneten Produkts, das gerade hergestellt wird, verursachen. Ausserdem bemerkt man, dass die Neigung der Kurve 26 in der Nähe des Gleichgewichtpunktes relativ gering ist. Somit ist die Rückstellkraft in der Nähe der Gleichgewichtsposition ebenfalls gering, derart, dass die Stabilität des beweglichen Teils bei Fehlen einer Stromversorgung gering ist. Schliesslich beobachtet man, dass die Resultierende 26 über den Funktionsbereich des Stellantriebs monoton absteigend ist. Die auf den beweglichen Teil ausgeübte Reluktanzkraft variiert über den ganzen Funktionsbereich. Die Resultierende 26 weist in den hohen Positionen des beweglichen Teils 6 einen nicht geringfügigen Wert auf.

Das Ziel der vorliegenden Erfindung ist, die oben erwähnten Nachteile zu beheben, indem sie einen senkrechten Stellantrieb liefert, dessen beweglicher Teil bei Fehlen einer Stromversorgung eine Position des stabilen Gleichgewichts aufweist, die einer hohen oder oberen Position dieses beweglichen Teils entspricht, wobei sie über den ganzen Funktionsbereich des Stellantriebs eine positive Resultierende gewährleistet, derart, dass der bewegliche Teil bei Fehlen einer Stromversorgung von irgendeiner Position des vorgesehenen Funktionsbereichs aus die Position des stabilen Gleichgewichts erreichen kann.
Zu diesem Zweck betrifft die vorliegende Erfindung einen senkrechten Stellantrieb, der von einem ortsfesten Teil und von einem beweglichen Teil gebildet ist, wobei der ortsfeste Teil ein Magnetjoch und wenigstens eine Spule, die von diesem Magnetjoch getragen wird, umfasst, wobei der bewegliche Teil wenigstens einen Permanentmagneten, der beweglich im Inneren des Magnetjochs angeordnet ist, umfasst. Der ortsfeste Teil umfasst ausserdem einen oberen Teil aus magnetischem Werkstoff, der oberhalb des beweglichen Teils angeordnet ist, wobei dieser obere Teil und das Joch durch einen Teil aus nichtmagnetischem Werkstoff magnetisch voneinander getrennt sind.

Dank des oberen Teils aus magnetischem Werkstoff kann man über den ganzen Funktionsbereich des Stellantriebs eine Reluktanzkraft erhalten, die positiv ist, d.h. die nach oben gerichtet ist. Ferner weist der bewegliche Teil im oberen Bereich des Funktionsbereichs oder leicht oberhalb dieses Funktionsbereichs einen Punkt des stabilen Gleichgewichts auf. Der obere magnetische Teil ist derart bemessen und positioniert, dass die globale Reluktanzkraft, die auf den beweglichen Teil ausgeübt wird, grösser ist als die auf die Masse des beweglichen Teils ausgeübte Schwerkraft. Vorzugsweise ist vorgesehen, dass die auf den beweglichen Teil ausgeübte Resultierende bei Fehlen einer Stromversorgung merklich über den ganzen Funktionsbereich des Stellantriebs nahe bei Null liegt.

Die vorliegende Erfindung wird nachstehend mit Hilfe der folgenden Beschreibung einer Ausführungsform, die keineswegs als einschränkendes Beispiel gegeben ist, ausführlicher beschrieben, die unter Bezugnahme auf die beigefügten Zeichnungen gemacht ist, in denen:
- Figur 1, die bereits beschrieben worden ist, einen senkrechten Stellantriebtyp des Standes der Technik im Schnitt darstellt;
- Figur 2, die bereits beschrieben worden ist, die Kurven der Reluktanzkraft und der auf den beweglichen Teil des Stellantriebs der Figur 1 ausgeübten Resultierenden darstellt;

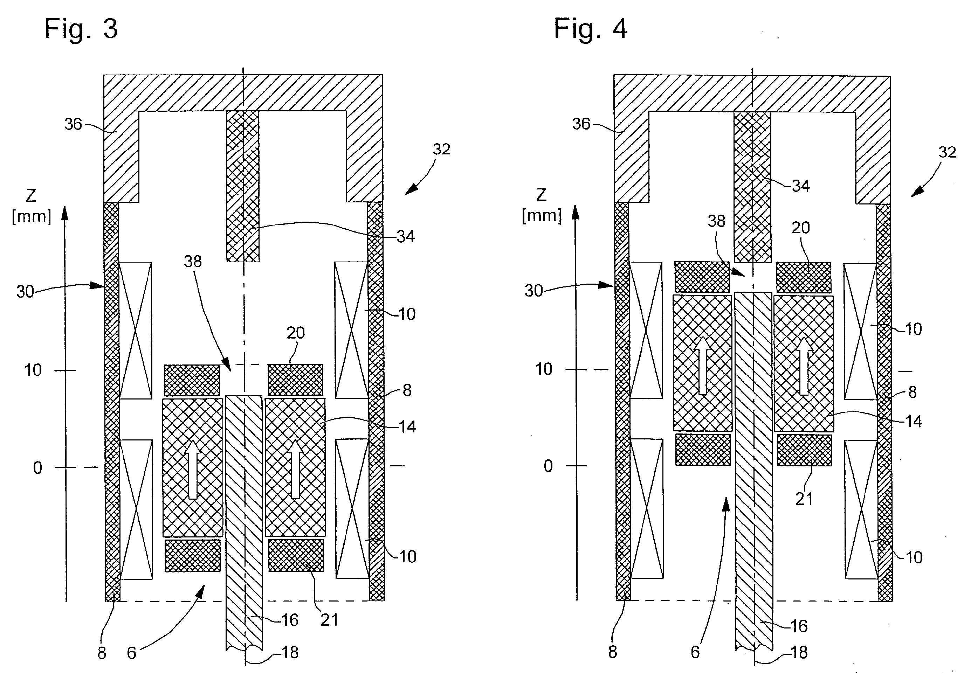

- die Figuren 3 und 4 Schnitte eines Stellantriebs gemäss der vorliegenden Erfindung sind, dessen beweglicher Teil sich in der unteren Position bzw. in der oberen Position des Funktionsbereichs dieses Stellantriebs befindet;

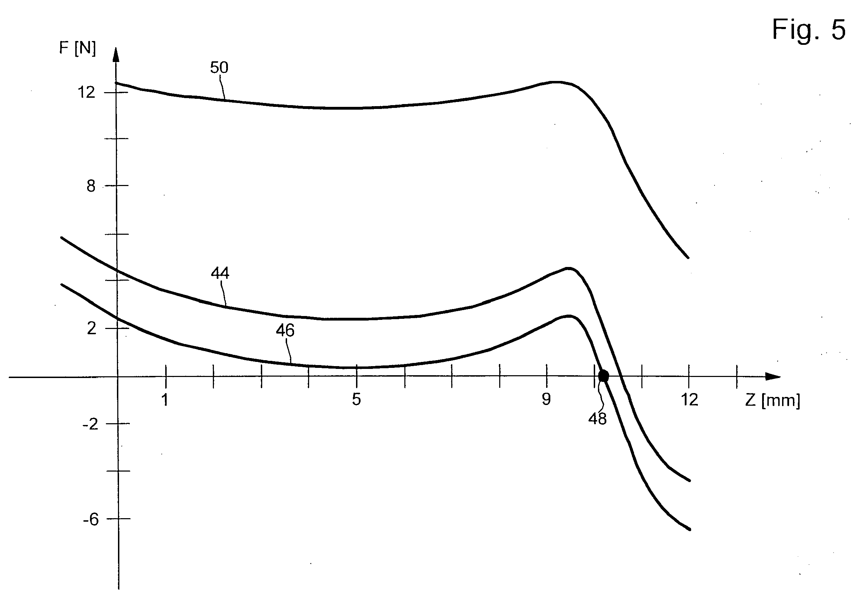

- Figur 5 die Kurven der Reluktanzkraft und der Resultierenden, die bei Fehlen einer Stromversorgung auf den beweglichen Teil ausgeübt wird, sowie eine Kurve der Gesamtkraft, die auf diesen beweglichen Teil ausgeübt wird, wenn der Stellantrieb mit elektrischem Strom gespeist wird, darstellt.
Mit Hilfe der Figuren 3 bis 5 wird nachstehend eine besondere Ausführungsform eines senkrechten Stellantriebs gemäss der vorliegenden Erfindung beschrieben. Die Bezugszeichen, die bereits zuvor im Zusammenhang mit dem Stellantrieb der Figur 1 ausführlich beschrieben worden sind, werden hier nicht alle erneut ausführlich beschrieben.

Der senkrechte Stellantrieb 32 ist dadurch gekennzeichnet, dass ein oberer Teil 34 aus magnetischem Werkstoff oberhalb des beweglichen Teils 6 angeordnet ist. Der obere Teil 34 ist ein Element des ortsfesten Teils 30 des Stellantriebs 32. Der Teil 34 wird von einem Teil 36 aus nichtmagnetischem Werkstoff getragen. Dieser Teil 36 bildet für den Stellantrieb eine Art Deckel. In materieller Hinsicht verbindet er den oberen magnetischen Teil 34 mit dem Magnetjoch 8, wobei er diese beiden Elemente magnetisch voneinander trennt. Der obere magnetische Teil 34 ist also vom Joch 8 magnetisch isoliert.

Der obere magnetische Teil 34 ist in der hier beschriebenen Ausführungsform von einem Metallstift gebildet, dessen Achse mit der zentralen Achse 18 des beweglichen Teils 6 zusammenfällt. Andere Formen und besondere Anordnungen können durch den Fachmann vorgesehen werden, ohne über den Rahmen der vorliegenden Erfindung hinauszugehen. Ferner müssen die magnetischen Teile des Stellantriebs nicht unbedingt eine Hauptachse aufweisen. Andere Formen und Konfigurationen sind möglich.

Die magnetischen Scheiben 20 und 21, die an beiden Enden des Magneten 14 des beweglichen Teils angeordnet sind, bilden Mittel zum Schliessen des Magnetfeldes, wobei diese Mittel mit dem Joch 8 einen Magnetkreis bilden, der das Magnetfeld wirksam mit der Spule 10 koppelt. Die äusseren Oberflächen der Scheiben 20 und 21 sind für die Reluktanzwirkung entscheidend. Der Abstand zwischen diesen äusseren Oberflächen der Scheiben 20 und 21 und den magnetischen Teilen des ortsfesten Teils 30 definiert im Wesentlichen den Wert der auf den beweglichen Teil 6 ausgeübten Reluktanzkraft. Man bemerkt also, dass der Abstand zwischen der oberen Scheibe 20 und dem oberen magnetischen Teil 34 bei einer Aufwärtsverlagerung des beweglichen Teils 6 bis auf einen sehr geringen Wert vermindert wird, was zwischen diesen beiden magnetischen Elementen eine nach oben gerichtete Reluktanzkraft erzeugt, die umso grösser ist, als der bewegliche Teil im Funktionsbereich des Stellantriebs steigt.

Um dem beweglichen Teil 6 zu ermöglichen, sich dem oberen Teil 34 zu nähern, hat man vorgesehen, die zentrale Aussparung 38 der oberen Scheibe 20 wenigstens teilweise frei zu lassen. Wie dies aus Figur 4, in der der bewegliche Teil 6 sich in der oberen Position des Funktionsbereichs befindet, hervorgeht, hat der Teil 34 eine untere Oberfläche, die merklich in der Ebene der oberen Oberfläche der Scheibe 20 ist. In dieser Variante, in der die Position des stabilen Gleichgewichts des beweglichen Teils sich leicht oberhalb dieses oberen Wertes (der hier 10 mm entspricht) befindet, dringt der Metallstift 34 bei Fehlen einer Speisung der Spule leicht in die Aussparung 38 der Scheibe ein. Es ist jedoch festzuhalten, dass der obere magnetische Teil 34 eine unterschiedliche Form aufweisen kann, die derart vorgesehen ist, dass der Teil 34 in seiner Position des stabilen Gleichgewichts vollständig oberhalb der oberen Scheibe 20 des beweglichen Teils liegt.

Auf Figur 5 ist die Kurve der globalen Reluktanzkraft, die auf den beweglichen Teil 6 ausgeübt wird, dargestellt. Diese Kurve 44 unterscheidet sich klar von der Kurve 24 des senkrechten Stellantriebs der Figur 1. Man beobachtet erstens, dass die globale Reluktanzkraft, die auf den beweglichen Teil, insbesondere auf den Permanentmagneten 14, der den magnetischen Scheiben 20 und 21 zugeordnet ist, ausgeübt wird, über den ganzen Funktionsbereich des Stellantriebs positiv ist, d.h., dass diese Reluktanzkraft über den ganzen Funktionsbereich nach oben gerichtet ist. Da im vorliegenden Fall ebenfalls eine Schwerkraft von 2 Newton vorgesehen ist, ist die globale Resultierende bei Fehlen einer Stromversorgung durch die Kurve 46 gegeben. Das Magnetjoch 8 und der obere magnetische Teil sind derart angeordnet, dass diese globale Resultierende über den ganzen Funktionsbereich des Stellantriebs grösser als Null, jedoch relativ nahe bei Null, ist. Mit anderen Worten hat die globale Reluktanzkraft über den ganzen Funktionsbereich des Stellantriebs einen Wert, der grösser ist als derjenige der Schwerkraft des beweglichen Teils.

Der magnetische Teil 34 bewirkt, dass die Reluktanzkraft auf einem Wert gehalten wird, der auch im oberen Abschnitt des Funktionsbereichs grösser ist als derjenige der Schwerkraft. Ausserdem beobachtet man, dass die Reluktanzkraft relativ schnell abnimmt und durch Null verläuft, was einen Punkt 48 des stabilen Gleichgewichts definiert. Gemäss der Erfindung befindet sich dieser Punkt 48 des stabilen Gleichgewichts des beweglichen Teils 6 im oberen Abschnitt oder oberhalb des Funktionsbereichs des Stellantriebs. Wenn der Funktionsbereich zwischen 0 und 10 mm vorgesehen ist, befindet sich der Punkt 48 des stabilen Gleichgewichts im vorliegenden Fall leicht oberhalb darüber. Wie zuvor erwähnt kann diese Position des stabilen Gleichgewichts einer Position des beweglichen Teils entsprechen, in der der Metallstift 34 leicht in die zentrale Ausnahme der oberen magnetischen Scheibe eindringt. Man beobachtet auch, dass die Neigung beim Gleichgewichtspunkt 48 relativ stark ist, was diesem Gleichgewichtspunkt im Gegensatz zum Fall des Stellantriebs der Figur 1 eine gute Stabilität verleiht.

Da die durch die Kurve 46 dargestellte globale Resultierende bei Fehlen einer Stromversorgung der Spule bis zum Gleichgewichtspunkt 48 über Null liegt, verlagert der bewegliche Teil sich unter Einwirkung dieser globalen Resultierenden ausgehend von irgendeiner Position im Funktionsbereich des Stellantriebs bis zum oberen Punkt des stabilen Gleichgewichts. Dazu genügt es, dass die Resultierende ein wenig grösser ist als die Reibungskräfte.

Auf Figur 5 ist auch die Gesamtkraft dargestellt, die auf den beweglichen Teil ausgeübt wird, wenn die Spule 10 mit einem gewissen elektrischen Strom gespeist wird. Diese Gesamtkraft ist durch die Kurve 50 dargestellt. Man beobachtet, dass diese Kurve im Funktionsbereich ein bisschen flacher ist als die Kurve 46 bei Fehlen einer Stromversorgung.
Schliesslich ist festzuhalten, dass das Magnetjoch und der obere magnetische Teil verschiedene Formen aufweisen können und dass sie derart konfiguriert sein können, dass sie die globale Reluktanzkraft, die auf den beweglichen Teil ausgeübt wird, optimieren.

## Patentansprüche

1. Senkrechter Stellantrieb (32), der von einem ortsfesten Teil (30) und von einem beweglichen Teil (6) gebildet ist, wobei der ortsfeste Teil ein Magnetjoch (8) und wenigstens eine Spule (10), die von diesem Joch getragen wird, umfasst, wobei der bewegliche Teil wenigstens einen Permanentmagneten (14), der beweglich im Inneren des Jochs angeordnet ist, umfasst, **dadurch gekennzeichnet, dass** der ortsfeste Teil zudem einen oberen Teil (34) aus magnetischem Werkstoff, der oberhalb des beweglichen Teils (6) angeordnet ist, umfasst, wobei dieser obere Teil und das Joch durch einen Teil (36) aus nichtmagnetischem Werkstoff magnetisch voneinander getrennt sind.

2. Senkrechter Stellantrieb gemäss Anspruch 1, **dadurch gekennzeichnet, dass** der Permanentmagnet (14) axial magnetisiert ist, wobei der bewegliche Teil (6) ferner Mittel (20, 21) zum Schliessen des Magnetfeldes umfasst, welche Mittel mit dem Joch (8) einen Magnetkreis bilden, der das Magnetfeld mit der wenigstens einen Spule koppelt.

3. Senkrechter Stellantrieb gemäss Anspruch 1 oder 2, **dadurch gekennzeichnet, dass** der obere magnetische Teil (34) von einem Metallstift gebildet ist, dessen Achse mit der zentralen Achse (18) des beweglichen Teils zusammenfällt.

4. Senkrechter Stellantrieb gemäss einem der vorhergehenden Ansprüche, **dadurch gekennzeichnet, dass** der obere magnetische Teil und das Joch derart angeordnet sind, dass die auf den beweglichen Teil ausgeübte Reluktanzkraft nach oben gerichtet ist und über den ganzen Funktionsbereich des senkrechten Stellantriebs einen Wert aufweist, der leicht grösser ist als derjenige der Schwerkraft, der dieser bewegliche Teil unterworfen ist, und dass dieser Stellantrieb bei Fehlen einer Stromversorgung der wenigstens einen Spule für den beweglichen Teil (6) einen Punkt des stabilen Gleichgewichts aufweist, der sich im oberen Abschnitt oder oberhalb des Funktionsbereichs des Stellantriebs befindet.

## Claims

1. Vertical actuator (32), which is formed by a stationary part (30) and by a movable part (6), the stationary part comprising a magnetic yoke (8) and at least one coil (10) which is carried by the said yoke, the movable part comprising at least one permanent magnet (14) which is arranged such that it can move in the interior of the yoke, **characterized in that** the stationary part additionally comprises an upper part (34) made of magnetic material, which is arranged above the movable part (6), the said upper part and the yoke being separated magnetically from each other by a part (36) made of non-magnetic material.

2. Vertical actuator according to Claim 1, **characterized in that** the permanent magnet (14) is magnetized axially, the movable part (6) further comprising means (20, 21) for closing the magnetic field, which means form with the yoke (8) a magnetic circuit which couples the magnetic field to the at least one coil.

3. Vertical actuator according to Claim 1 or 2, **characterized in that** the upper magnetic part (34) is formed by a metal pin, the axis of which coincides with the central axis (18) of the movable part.

4. Vertical actuator according to one of the preceding claims, **characterized in that** the upper magnetic part and the yoke are arranged in such a way that the reluctance force exerted on the movable part is directed upwards and, over the entire functional range of the vertical actuator, has a value which is slightly greater than that of the force of gravity to which this movable part is subjected, and **in that**, in the absence of a power supply of the at least one coil for the movable part (6), this actuator has a point of stable equilibrium which is located in the upper section or above the functional range of the actuator.

## Revendications

1. Actionneur vertical (32), qui est composé d'une partie fixe (30) et d'une partie mobile (6), la partie fixe comprenant une armature d'aimant (8) et au moins une bobine (10) qui est portée par cette armature, la partie mobile comprenant au moins un aimant permanent (14) qui est monté mobile à l'intérieur de l'armature, **caractérisé en ce que** la partie fixe comprend en plus une partie supérieure (34) en matériau magnétique qui est disposée au-dessus de à partie mobile (6), cette partie supérieure et l'armature étant isolées magnétiquement l'une de l'autre par une partie (36) en matériau non magnétique.

2. Actionneur vertical selon la revendication 1, **caractérisé en ce que** l'aimant permanent (14) est magnétisé dans le sens axial, la partie mobile (6) comprenant en outre des moyens (20, 21) destins à fermer le champ magnétique, lesquels moyens formant avec l'armature (8) un circuit magnétique qui couple le champ magnétique avec l'au moins une bobine.

3. Actionneur vertical selon la revendication 1 ou 2, **caractérisé en ce que** la partie magnétique supérieure (34) est formée par une broche métallique dont l'axe coïncide avec l'axe central (18) de la partie mobile.

4. Actionneur vertical selon l'une des revendications précédentes, **caractérisé en ce que** la partie magnétique supérieure et l'armature sont disposées de telle sorte que la force de réluctance exercée sur la partie mobile est dirigée vers le haut et possède sur toute la zone de fonctionnement de l'actionneur vertical une valeur qui est légèrement supérieure à celle de la force de gravit à laquelle est soumise cette partie mobile, et **en ce que** cet actionneur vertical, en cas d'absence d'une alimentation électrique de l'au moins une bobine, présente pour la partie mobile (6) un point d'équilibre stable qui se trouve dans la portion supérieure ou à proximité de la zone de fonctionnement de l'actionneur.
